# FASCICULE DE BREVET EUROPEEN

(11) **EP 1 911 649 B1**
(45) Date de publication et mention de la délivrance du brevet: **28.04.2010**
(21) Numéro de dépôt: 07116548.4
(22) Date de dépôt: 17.09.2007
(51) Int. Cl.: B60T 13/575, B60T 7/10, B60T 11/04, B60T 13/56

(54) **Un servomoteur pour frein à main**
Servomotor für eine Feststellbremse
Servomotor for a parking brake

(30) Priorité: 13.10.2006 FR 0609032
(43) Date de publication de la demande: 16.04.2008
(73) Titulaire: Robert Bosch GmbH, 70469 Stuttgart (DE)
(72) Inventeur: Hurwic, Aleksander, 75020 PARIS (FR); Beylerian, M. Bruno, 95380 LOUVRES (FR)
(74) Mandataire: Hurwic, Aleksander Wiktor

(56) Documents cités:
- DE-A1- 1 430 412
- DE-A1- 3 906 529
- GB-A- 2 058 977
- US-A- 3 150 493

## Description

L'invention concerne un servomoteur d'assistance au freinage pour frein à commande manuelle et un frein à main appliquant un tel servomoteur.

Un servomoteur d'assistance au freinage destiné à la transmission des commandes de câbles freins à main est décrit dans DE 1430412.

De façon générale, les freins à mains connus dans la technique automobile utilisent un levier permettant d'agir sur des freins de roues par l'intermédiaire de d'une transmission par câbles et/ou par tringles. Ces freins agissent généralement sur les roues arrière du véhicule.

Le serrage et le desserrage de ces freins ne sont pas forcément aisés pour certains utilisateurs. C'est pourquoi certains véhicules sont maintenant équipés de freins de parking motorisés ou commandés par un actionneur. Certains véhicules sont même équipés de freins de parking automatiques qui fonctionnent dès l'arrêt du moteur.

Cependant ces systèmes présentent certains inconvénients. Notamment, ces systèmes ne peuvent prendre en compte que très difficilement, où ne prennent pas en compte du tout, les conditions d'arrêt du véhicule, tel que l'inclinaison du terrain sur lequel est arrêté le véhicule. Ces systèmes appliquent aux dispositifs de freinage des roues un effort de freinage quasiment standard. Dans ces conditions, dans certains cas d'immobilisation du véhicule, l'effort de freinage est excessif. Un effort moindre pourrait être appliqué tout en donnant satisfaction. Il en résulte une usure supplémentaire et inutile du système de freinage.

Par ailleurs, avec de tels freins, le conducteur ne peut pas contrôler la puissance du freinage. Dans certains cas, cela peut être un inconvénient. Par exemple dans les cas des démarrages en côtes, le conducteur ne peut agir sur les freins et il faut prévoir un système de commande électronique compliqué.

Dans le cas des dérapages contrôlés, le conducteur ne peut utiliser le frein à main pour contrôler le dérapage.

Les systèmes de freins à main dans lesquels le conducteur garde le contrôle de la puissance de freinage conservent leurs avantages. En effet, le conducteur peut doser la puissance du freinage en fonction de la configuration du terrain et éviter d'imposer un freinage excessif dans une configuration qui ne le nécessite pas, ce qui évite une usure inutile du système de freinage. Le conducteur peut également utiliser le frein à main pour exécuter un dérapage contrôlé.

Par ailleurs, sous l'effet de la chaleur les organes de freinage peuvent se dilater et le conducteur peut doser le freinage en fonction du retour de force qu'il perçoit manuellement en actionnant le frein à main. Egalement, en cas d'utilisation de ce type de frein comme moyen de freinage d'urgence, on peut réduire le freinage en cas de blocage des roues.

Par contre, il est connu que les freins à mains classiques sont quelques fois difficiles à utiliser pour certains conducteurs. Par exemple, soit ils ne peuvent pas, par manque de force, serrer suffisamment le frein à main de leur voiture, soit ils ne savent pas le desserrer.

L'invention fournit un système de frein à main permettant de résoudre cet inconvénient et qui est donc aisément utilisable par tout conducteur tout en conservant les avantages des systèmes de freins à main classiques.

L'invention présente également l'avantage de fournir un système de freinage peu encombrant.

L'invention concerne donc un servomoteur d'assistance au freinage destiné à la transmission des commandes d'un frein à main comprenant :
- une tige de commande,
- un plongeur mobile axialement sous la commande de la tige de commande,
- une enceinte contenant une paroi mobile séparant l'intérieur de l'enceinte en une chambre de travail et en une chambre à vide connectée à un organe de dépression. Cette paroi est mobile axialement sous l'effet dudit plongeur et/ou d'une différence de pression entre la chambre à vide et la chambre de travail,
- un piston mobile également axialement solidaire de la paroi mobile de l'enceinte,
- une vanne trois voies commandée par ledit plongeur permet de connecter la chambre de travail soit à la chambre à vide, soit à l'air atmosphérique,
- un disque de réaction de section annulaire,
- une pièce d'appui commandée par le piston permet d'entraîner la tige de commande,
- une tige de sortie passant au centre du disque de réaction,
- une tige de commande passant au centre du disque de réaction,

Selon une forme de réalisation préférée de l'invention, la tige de commande est située du côté de la chambre à vide et, lors d'une commande de freinage, exerce un effort de traction sur le plongeur.

On pourra prévoir, de préférence, que la tige de sortie soit solidaire de la tige de commande.

On pourra également prévoir que la vanne trois voies comporte un clapet capable d'être en contact, selon sa position:
- soit avec une face du plongeur,
- soit avec ladite face du plongeur et une face du piston,
- soit avec ladite face du piston.

Selon une forme de réalisation avantageuse de l'invention, la pièce d'appui possède un disque de réaction en matériau déformable élastiquement situé entre la pièce d'appui et le piston.

L'invention concerne également un frein à main de véhicule appliquant le servomoteur précédemment décrit. Il comprend alors un organe de commande manuelle couplé mécaniquement à ladite tige de commande et ladite tige de sortie est destinée à être couplée mécaniquement à des dispositifs de freins de roues d'un véhicule.

De façon générale, l'invention concerne également un frein à main de véhicule comprenant un organe de commande manuelle et un câble (ou tige) de transmission permettant de transmettre des commandes de freinage vers des dispositifs de freins de roues à commander. Un servomoteur d'assistance au freinage est couplé mécaniquement au câble (ou à tige) de transmission et permet de transmettre les dites commandes de freinage aux dispositifs de freins.

Avantageusement, ledit câble (ou tige) de transmission communique des efforts de traction au servomoteur et le servomoteur communique des efforts de traction aux dispositifs de freins de roues.

La présente invention a pour objet un fein à main tel que décrit dans la revendication 1.

Les différents objets et caractéristiques de l'invention apparaîtront plus clairement dans la description qui va suivre ainsi que dans les figures annexées qui représentent:
- la figure 1, un schéma de réalisation général simplifié d'un système de frein à main selon l'invention,
- la figure 2, un servomoteur d'assistance au freinage applicable au système de la figure 1.

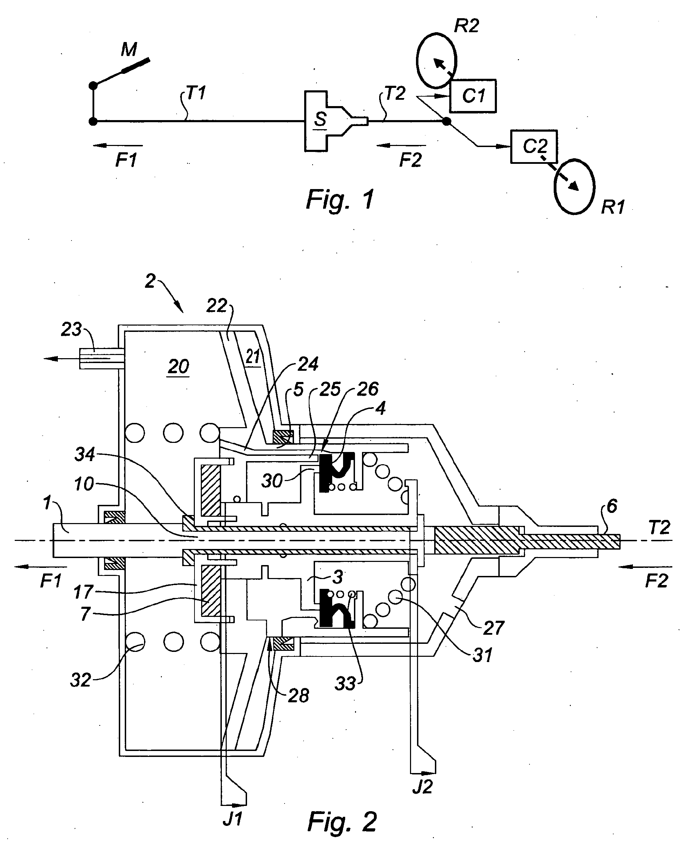

En se reportant à la figure 1, on va donc décrire un exemple de réalisation simplifié d'un système de frein à main selon l'invention.

Ce système comporte un organe de commande manuelle tel qu'un levier de frein à main M qui agit par l'intermédiaire d'un premier système de câbles ou de tringles T1 sur un système d'assistance au freinage S. Celui-ci agit par l'intermédiaire d'un deuxième système de câbles ou de tringles T2 sur des dispositifs de freinage C1 et C2 associés aux roues R1 et R2 d'un véhicule.

Le système d'assistance au freinage S que nous appellerons servomoteur S dans la suite de la description reçoit les commandes de freinages qui lui sont communiquées par le premier système de câbles T1 et les communiquent de manière amplifiée au deuxième système de câbles T2 tout en laissant la maîtrise du freinage à l'utilisateur.

Une particularité du servomoteur S prévu dans ce système est qu'il est commandé par un système de câbles agissant par traction selon le sens de la flèche F1 et qu'il communique un effort de freinage également par traction selon le sens de la flèche F2. Un tel servomoteur est donc différent des servomoteurs d'assistance au freinage utilisés dans les systèmes de freinage connus dans la technique, lesquels servomoteurs sont commandés par des tige fonctionnant en poussée (au lieu de traction) et qu'ils communiquent par poussée un effort de freinage aux maîtres cylindres de freins.

En se reportant à la figure 2, on va donc décrire un exemple de réalisation d'un servomoteur d'assistance au freinage selon l'invention applicable aux systèmes de freinage de la figure 1 commandé (par exemple) par frein à main.

Ce servomoteur comporte essentiellement une enceinte 2 comprenant une chambre à vide 20 et une chambre de travail 21 qui sont séparées par une paroi mobile 22. La chambre à vide 20 est reliée par un accès 23 à un système de création de dépression tel qu'une pompe à vide actionnée par le moteur du véhicule.

Une tige de commande 1 peut se déplacer axialement et permet de commander le déplacement d'un plongeur 3.

Une vanne trois voies comportant un clapet 4 et commandée par le plongeur 3, permet, selon sa position, de:
- mettre en communication la chambre de travail 21 avec la chambre à vide 20 (il s'agit de la position de repos représentée par la figure 2),
- isoler la chambre de travail 21 de la chambre à vide 20 (il s'agit d'une phase de début de freinage),
- mettre en communication la chambre de travail 21 avec l'air atmosphérique (le servomoteur fournit un effort de freinage).

Par ailleurs, un piston 5 est solidaire de la paroi mobile 22 et permet d'exercer un effort de poussée sur un épaulement 10 de la tige 6 selon la direction indiquée par la flèche F1.

Enfin une tige de sortie 6 est mobile axialement par rapport la tige 1 limitée par le J2 et permet de communiquer un effort de freinage du servomoteur vers le système de câbles T2 de la figure 1.

Le fonctionnement d'un tel servomoteur est donc le suivant.

Au repos, en l'absence de commande de freinage, le servomoteur est dans la situation représentée sur la figure 2. Le plongeur a sa surface 30 en contact avec le clapet 4. La surface 25 du piston 5 n'est pas en contact avec le clapet 4. La chambre à vide 20 est en communication avec la chambre de travail 21 par un espace de communication 26.

La chambre de travail 21 est donc isolée de l'air atmosphérique elle est au même état de vide que la chambre à vide 20. Aucun effort de pression ne s'exerce sur la paroi mobile 22.

Lorsque le conducteur du véhicule actionne le levier de frein à main, un effort de traction est exercé par le système de câble T1 selon la flèche F1 sur la tige de commande 1, celle-ci se déplace vers la gauche (selon la représentation de la figure 2).

Ce déplacement de la tige de commande 1 est transmis au plongeur 3 qui se déplace vers la gauche. La surface 30 du plongeur se déplace vers la gauche. Le ressort 33 pousse le clapet 4 vers la gauche et le clapet accompagne donc le plongeur dans son déplacement.

Le clapet 4 entre en contact avec la surface 25 du piston 5. L'espace de communication 26 entre la chambre à vide 20 et la chambre de travail 21 est interrompu. La chambre à vide est isolée de la chambre de travail.

La tige 1 continu à se déplacer vers la gauche et entraîne le plongeur 3. La surface 30 du plongeur se sépare du clapet 4 dont le déplacement est arrêté par la surface 25 du piston 5. La chambre de travail 21 est ainsi mise en communication avec l'air atmosphérique:
- par l'espace de communication 28,
- par un espace de communication qui vient d'être créé ente la surface 30 du plongeur 3 et le clapet 4
- et par un accès à l'air ambiant 27 prévu dans la paroi du servomoteur.

La pression dans la chambre à vide 20 est faible tandis que la chambre de travail 21 est à une pression plus élevée. L'air contenu dans la chambre de travail exerce donc une pression sur la paroi mobile 22 qui se déplace vers la gauche. Dans son déplacement, la paroi 22 entraîne le piston 5 qui entraîne lui-même la pièce d'appui 17. Celle-ci est en appui sur l'épaulement 10 de la tige de commande 6.

Dans ce fonctionnement, la traction de la tige de sortie 6 sur le système de câbles de la figure 1 est initié par l'effort communiqué par le levier de frein à main à la tige de commande, puis la paroi mobile du servomoteur applique un effort à l'épaulement 10, ce qui permet à la tige de sortie 6 d'exercer un effort de traction nécessaire à la commande des freins

On peut également associer à la pièce d'appui 17 un disque de réaction 7 de section annulaire. Le piston 5 servant à transmettre la force d'assistance à la tige de sortie 6 agit sur la pièce d'appui 17 au travers d'un disque de réaction réalisé en un matériau déformable tel qu'un élastomère.

Au repos, un faible jeu j1 existe entre l'extrémité avant du plongeur 3 et le disque de réaction 7. Lorsque le conducteur du véhicule commence à actionner levier de frein, ce faible jeu permet au plongeur de se déplacer immédiatement sans agir sur le disque de réaction 7 pour commander les moyens d'assistance et assurer une réponse immédiate des freins.

Ensuite, le piston 3 agit sur le disque de réaction 7 et donc sur l'épaulement 10 de la tige de commande 6 par l'intermédiaire de la pièce d'appui 17.

Il apparaît que la réaction à la manoeuvre du levier de frein à main ne commence à apparaître que lorsque la force d'assistance engendrée par l'actionnement du levier de frein à main dépasse un certain seuil. Ce seuil est appelé le "saut" du servomoteur. Il constitue une caractéristique importante du servomoteur. En effet, si l'existence du saut est imposée pour une réponse des freins lors d'un actionnement du levier de frein à main, la valeur de ce saut reste dans certaines limites pour que l'assistance n'atteigne pas une valeur trop grande sans augmentation de l'effort exercer à l'aide du levier de frein à main.

## Revendications

1. Frein à main de véhicule comprenant un servomoteur d'assistance au freinage destiné à la transmission des commandes de câbles freins à main comprenant :
- une tige de commande (1),
- un plongeur (3) mobile axialement sous la commande de la tige de commande (1),
- une enceinte (2) contenant une paroi mobile (22) séparant l'intérieur de l'enceinte en une chambre de travail (21) et en une chambre à vide (20) connectée à un organe de dépression, ladite paroi étant mobile axialement sous l'effet dudit plongeur (3) et/ou d'une différence de pression entre la chambre à vide et la chambre de travail,
- un piston (5) mobile également axialement étant solidaire de la paroi mobile (22) de l'enceinte,**caractérisé en ce que**
- une vanne trois voies (4) est commandée par ledit plongeur (3) permettant de connecter la chambre de travail (21) soit à la chambre à vide, soit à l'air atmosphérique,
- un disque de réaction est de section annulaire,
- une tige de sortie (6) passe au centre du disque de réaction (7),
- une tige de commande (1) passe au centre du disque de réaction (7),
- la tige de commande (1) est située du côté de la chambre à vide (20) et, lors d'une commande de freinage, exerce un effort de traction sur le plongeur (3).

2. Un frein à main de véhicule comprenant un servomoteur selon la revendication 1, **caractérisé en ce que** la vanne trois voies comporte un clapet (4) capable d'être en contact, selon sa position:
- soit avec une face (30) du plongeur (3),
- soit avec ladite face (30) du plongeur (3) et une face (25) du piston (5),
- soit avec ladite face (25) du piston (5).

3. Un frein à main de véhicule comprenant un servomoteur selon la revendication 1, **caractérisé en ce que** la pièce d'appui (17) possède un disque de réaction (7) en matériau déformable élastiquement situé entre la pièce d'appui et le piston.

4. Un frein à main de véhicule comprenant un servomoteur selon la revendication 1, **caractérisé en ce que** le disque réaction (7) est de section annulaire.

5. Frein à main de véhicule selon l'une quelconque des revendications précédentes, **caractérisé en ce qu'**il comprend un organe de commande manuelle (M) couplé mécaniquement à ladite tige de commande (1), ladite tige de sortie (6) étant destinée à être couplée mécaniquement à des freins de roues (C1, C2) d'un véhicule.

6. Frein à main de véhicule selon les revendications de 1 à 4, comprenant un organe de commande manuelle (M) et un câble ou une tige de transmission (T1) permettant de transmettre des commandes de freinage vers des dispositifs de freins de roues (C1, C2) à commander, qui comporte un servomoteur d'assistance au freinage (S) couplé mécaniquement au câble ou à ladite tige de transmission (T1) et permettant de transmettre les dites commandes de freinage aux dispositifs de freins (C1, C2).

7. Frein à main selon la revendication 6, **caractérisé en ce que** ledit câble ou la dite tige de transmission (T1) communique un effort de traction audit servomoteur et **en ce que** le servomoteur communique un effort de traction aux dispositifs de freins de roues (C1, C2).

## Claims

1. Vehicule handbrake comprising a brake booster intended to transmit hand brake cable commands, comprising:
- a control rod (1),
- a plunger (3) able to move axially under the command of the control rod (1),
- an enclosure (2) containing a moving wall (22) dividing the inside of the enclosure into a working chamber (21) and a vacuum chamber (20) which is connected to a depression member, said wall being able to move axially under the effect of said plunger (3) and/or of a difference in pressure between the vacuum chamber and the working chamber,
- a piston (5) able also to move axially and secured to the moving wall (22) of the enclosure, **characterized in that**
- a three-way valve (4) is controlled by said plunger (3) allowing the working chamber (21) to be connected either to the vacuum chamber or to atmospheric air,
- a reaction disk is of annular cross section,
- an output rod (6) passes through the center of the reaction disk (7),
- a control rod (1) passes through the center of the reaction disk (7).
- the control rod (1) is situated on the same side as the vacuum chamber (20) and, under a braking command, exerts a pulling force on the plunger (3).

2. Vehicule handbrake comprising a booster according to Claim 1, **characterized in that** the three-way valve comprises a valve shutter (4) capable of being in contact, according to its position:
- either with one face (30) of the plunger (3),
- or with said face (30) of the plunger (3) and a face (25) of the piston (5),
- or with said face (25) of the piston (5).

3. Vehicule handbrake comprising a booster according to Claim 1, **characterized in that** the bearing piece (17) has a reaction disk (7) made of elastically deformable material and situated between the bearing piece and the piston.

4. Vehicule handbrake comprising a booster according to Claim 1, **characterized in that** the reaction disk (7) is of annular cross section.

5. Vehicle handbrake according to any one of the preceding claims, **characterized in that** it comprises a manual control member (M) mechanically coupled to said control rod (1), said output rod (6) being intended to be mechanically coupled to wheel brakes (C1, C2) of a vehicle.

6. Vehicle handbrake according to claims 1 to 4, comprising a manual control member (M) and a transmission cable or rod (T1) allowing braking commands to be transmitted to wheel brake devices (C1, C2) that are to be operated, which comprises a brake booster (S), mechanically coupled to the transmission cable or rod (T1) and allowing said braking commands to be transmitted to the brake devices (C1, C2).

7. Handbrake according to Claim 6, **characterized in that** said transmission cable or rod (T1) imparts a pulling force to said booster and **in that** the booster imparts a pulling force to the wheel brake devices (C1, C2).

## Patentansprüche

1. Fahrzeugfeststellbremse mit einem Servomotor zur Bremsunterstützung, der zur Übertragung der Betätigungen von Feststellbremskabeln vorgesehen ist, mit:
- einer Steuerstange (1),
- einem durch Steuerung durch die Steuerstange (1) axial beweglichen Tauchkolben (3),
- einem Raum (2) mit einer beweglichen Wand (22), die das Innere des Raums in eine Arbeitskammer (21) und eine mit einem Unterdruckorgan verbundene Vakuumkammer (20) unterteilt, wobei die Wand unter der Wirkung des Tauchkolbens (3) und/oder einer Druckdifferenz zwischen der Vakuumkammer und der Arbeitskammer axial beweglich ist,
- einem Kolben (5), der auch axial beweglich und mit der beweglichen Wand (22) des Raums fest verbunden ist, **dadurch gekennzeichnet, dass**
- ein Dreiwegeventil (4) von dem Tauchkolben (3) gesteuert wird und die Verbindung der Arbeitskammer (21) mit der Vakuumkammer oder mit der atmosphärischen Luft ermöglicht,
- eine Reaktionsscheibe einen ringförmigen Querschnitt hat,
- eine Ausgangsstange (6) durch die Mitte der Reaktionsscheibe (7) verläuft,
- eine Steuerstange (1) durch die Mitte der Reaktionsscheibe (7) verläuft,
- die Steuerstange (1) auf der Seite der Vakuumkammer (20) angeordnet ist und bei einer Bremssteuerung eine Zugkraft auf den Tauchkolben (3) ausübt.

2. Fahrzeugfeststellbremse mit einem Servomotor nach Anspruch 1, **dadurch gekennzeichnet, dass** das Dreiwegeventil ein Ventilelement (4) aufweist, das in Abhängigkeit von seiner Position
- entweder eine Fläche (30) des Tauchkolbens (3),
- oder die Fläche (30) des Tauchkolbens (3) und eine Fläche (25) des Kolbens (5)
- oder die Fläche (25) des Kolbens (5) berühren kann.

3. Fahrzeugfeststellbremse mit einem Servomotor nach Anspruch 1, **dadurch gekennzeichnet, dass** das Auflagestück (17) eine Reaktionsscheibe (7) aus elastisch verformbarem Material aufweist, die zwischen dem Auflagestück und dem Kolben liegt.

4. Fahrzeugfeststellbremse mit einem Servomotor nach Anspruch 1, **dadurch gekennzeichnet, dass** die Reaktionsscheibe (7) ringförmig ist.

5. Fahrzeugfeststellbremse nach einem der vorhergehenden Ansprüche, **dadurch gekennzeichnet, dass** sie ein Organ (M) zur manuellen Steuerung aufweist, das mechanisch an die Steuerstange (1) gekoppelt ist, wobei die Ausgangsstange (6) dazu vorgesehen ist, mechanisch an Radbremsen (C1, C2) eines Fahrzeugs gekoppelt zu sein.

6. Fahrzeugfeststellbremse nach den Ansprüchen 1 bis 4, die ein Organ (M) zur manuellen Steuerung und ein Kabel oder eine Übertragungsstange (T1) aufweist, mit dem/der es möglich ist, Bremssteuerungen zu zu steuernde Radbremsvorrichtungen (C1, C2) zu leiten, und die einen Servomotor (S) zur Bremsunterstützung aufweist, der mechanisch an das Kabel oder die Übertragungsstange (T1) gekoppelt ist und es ermöglicht, die Bremssteuerungen zu den Bremsvorrichtungen (C1, C2) zu leiten.

7. Feststellbremse nach Anspruch 6, **dadurch gekennzeichnet, dass** das Kabel oder die Übertragungsstange (T1) eine Zugkraft zum Servomotor überträgt und der Servomotor eine Zugkraft zu den Radbremsvorrichtungen (C1, C2) überträgt.
